Europäisches Patentamt

European Patent Office

Office européen des brevets

(19)

(11) Veröffentlichungsnummer: **0 084 814**
**B1**

(12) **EUROPÄISCHE PATENTSCHRIFT**

(45) Veröffentlichungstag der Patentschrift:
17.04.85

(51) Int. Cl.⁴: **H 02 H 3/33**

(21) Anmeldenummer: 83100243.1

(22) Anmeldetag: 13.01.83

(54) Fehlerstromschutzschalter, der auf Fehlerströme mit Gleichstromkomponenten anspricht.

(30) Priorität: 26.01.82 DE 3202320

(43) Veröffentlichungstag der Anmeldung:
03.08.83 Patentblatt 83/31

(45) Bekanntmachung des Hinweises auf die Patenterteilung:
17.04.85 Patentblatt 85/16

(84) Benannte Vertragsstaaten:
AT BE CH FR GB IT LI NL SE

(56) Entgegenhaltungen:
EP - A - 0 044 999
FR - A - 2 099 548
FR - A - 2 106 374

SIEMENS POWER ENGINEERING, Band 3, Nr. 8-9,
August/September 1981, Seiten 252-255, Passau, DE H.
RÖSCH: "Current-operated ELCBs for AC and pulsating
DC fault currents"

(73) Patentinhaber: Siemens Aktiengesellschaft, Berlin und
München Wittelsbacherplatz 2, D-8000 München 2 (DE)

(72) Erfinder: Rösch, Helmut, Dipl.-Ing., Schulterbreiten
Strasse 6, D-8411 Eilsbrunn (DE)
Erfinder: Solleder, Reinhard, Dipl.-Ing., Maxstrasse 6,
D-8411 Hainsacker (DE)
Erfinder: Stich, Karl-Heinz, Friedrich-Ebert-Strasse 10,
D-8400 Regensburg (DE)

## Beschreibung

Die Erfindung bezieht sich auf einen Fehlerstromschutzschalter nach dem ersten Teil des Patentanspruchs, gemäß EP-A1-0 044 999, die gemäß Artikel 54(3) EPÜ zum Stand der Technik gehört.

Es ist ein Fehlerstromschutzschalter bekannt, der auf Fehlerströme mit Gleichstromkomponenten anspricht, dessen Magnetkern des Summenstromwandlers einen Induktionshub hat, der für einen in seiner Primärwicklung fließenden pulsierenden Gleichstromfehlerstrom ausreichend groß ist, um in der Sekundärwicklung eine zum Betätigen des Auslösemagneten mittels seiner Auslösewicklung erforderliche Spannung zu induzieren (DE-B-2 044 302).

Es ist weiter ein Fehlerstromschutzschalter bekannt, der zwischen Sekundärwicklung und Auslösewicklung einen Kondensator aufweist, wobei der dadurch gebildete Schwingkreis auf die Frequenz der Spannung abgestimmt ist, die in der Sekundärwicklung von einem in der Primärwicklung des Summenstromwandlers fließenden pulsierenden Gleichstromfehlerstrom induziert wird (DE-C-2 036 497).

Die Kombination der geschilderten Maßnahmen ist in der EP-A1-0 044 999 (Artikel 54(3) EPÜ vorgeschlagen worden und zwar mit einem Magnetkern, der eine dynamische Differenzinduktion, $\varDelta$Bdyn, zwischen der maximalen Induktion, Bmax, und der dynamischen Remanenzinduktion, Brdyn, von

$$\varDelta\,\text{Bdyn} \geqq 0,1\ \text{T}$$

aufweist und bei dem das Verhältnis der statischen Differenzinduktion, $\varDelta$Bstat, zwischen der maximalen Induktion, Bmax, und der statischen Remanenzinduktion, Brstat, zur dynamischen Differenzinduktion, $\varDelta$Bdyn, der Beziehung genügt:

$$\frac{\varDelta\,\text{Bstat}}{\varDelta\text{Bdyn}} \leqq 1,3\ .$$

Ein solcher Fehlerstromschutzschalter spricht auf Wechselstromfehlerströme sowie auf pulsierende Fehlerströme, also auf Gleichstromkomponenten, an.

Der Erfindung liegt die Aufgabe zugrunde, einen Fehlerstromschutzschalter der eingangs geschilderten Art so weiterzubilden, daß er auf die verschiedensten Fehlerstromformen (z. B. nach VDE-Vorschrift 0664 Teil 1/5. 81) auch bei Serienfertigung sicher anspricht.

Die Lösung der geschilderten Aufgabe liegt in einem Fehlerstromschutzschalter mit den Merkmalen nach dem kennzeichnenden Teil des Patentanspruchs. Danach ist bei einem Fehlerstromschutzschalter für einen zur Auslösung führenden Nennfehlerstrom von 300 bzw. 500 mA weiter die Amplitude der magnetischen Feldstärke bei Wechselstrom etwa Ĥ~ = 0,03 A/cm. Die zugeordnete magnetische Induktion liegt danach etwa bei

$$\hat{B} \geqq 0,5\ \text{T}\,.$$

Für einen Auslösenennfehlerstrom kleiner oder gleich 10 mA soll das Verhältnis der statischen Differenzinduktion mit Gleichstromüberlagerung, $\varDelta$Bstatmitgleich, zur statischen Differenzinduktion ohne Gleichstromüberlagerung, $\varDelta$Bstatohnegleich, einen Wert von 0,85 nicht unterschreiten. Es gilt also die Beziehung:

$$\frac{\varDelta\,\text{Bstatmitgleich}}{\varDelta\,\text{Bstatohnegleich}} \geqq 0,85\,.$$

Ein solcher Fehlerstromschutzschalter mit Nennfehlerstrom 10 mA löst bei Halbwellenstrom als Fehlerstrom ordnungsgemäß aus, auch wenn gleichzeitig ein glatter Gleichfehlerstrom von 6 mA (= einer Feldstärke von 7,5 mA/cm) dem Halbwellenstrom überlagert ist. Bei Fehlerstromschutzschaltern mit Nennfehlerstrom 10 mA beträgt der überlagerte Gleichstrom von 6 mA dabei bereits 60% des Nennfehlerstromes. Der Fehlerstromschutzschalter nach der Erfindung spricht auch bei diesem überlagerten Gleichfehlerstrom sicher an.

Die Erfindung soll nun anhand eines in der Zeichnung grob schematisch wiedergegebenen Ausführungsbeispiels näher erläutert werden:

In Fig. 1 ist der prinzipielle Aufbau des Fehlerstromschutzschalters wiedergegeben.

In Fig. 2 ist ein Diagramm dargestellt, auf der Abszisse ist die Feldstärke und auf der Ordinate die magnetische Induktion des Materials des Kernes des Summenstromwandlers aufgetragen.

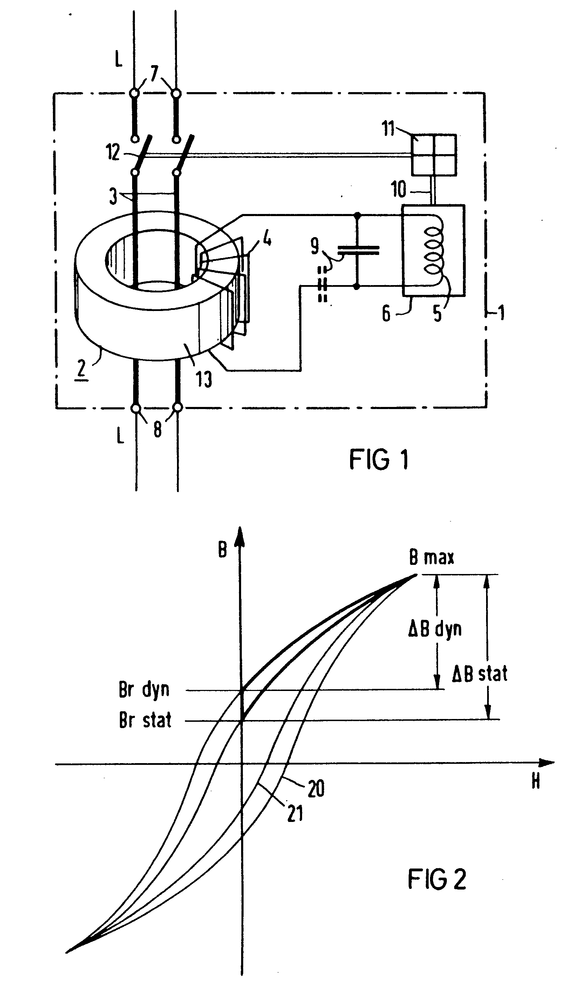

Der Fehlerstromschutzschalter 1 nach Fig. 1 besteht im wesentlichen aus dem Summenstromwandler 2 mit den durchgeführten zu überwachenden Leitern, die die Primärwicklung 3 darstellen, und der Sekundärwicklung 4, die mit der Auslösewicklung 5 des Auslösers 6 verbunden ist. Der Auslöser 6 kann ein Haltemagnet sein. Der zu überwachende Verbraucher und das Versorgungsnetz ist wahlweise an den Klemmen 7 oder 8 angeschlossen vorzustellen.

Zwischen der Sekundärwicklung 4 und der Auslösewicklung 5 ist ein Kondensator 9 eingeschaltet, der parallel oder in Reihe liegen kann. Der dadurch gebildete Schwingkreis ist auf die Frequenz der Spannung abgestimmt, die in der Sekundärwicklung 4 von einem in den Primärwicklungen 3 des Summenstromwandlers fließenden pulsierenden Gleichstromfehlerstrom induziert wird. Der Auslöser 6, beispielsweise ein Haltemagnet, wirkt über ein mechanisches Verbindungteil 10 auf das Schaltschloß 11 ein. Wenn das Schaltschloß 11 entklinkt wird, werden die Kontakte 12 geöffnet und der zu überwachende Verbraucher vom Netz abgeschaltet.

Wesentlich ist dabei, daß das Material des Magnetkerns 13 des Summenstromwandlers 2

den Beziehungen genügt:

$$\varDelta \, \text{Bdyn} \geqq 0{,}1 \, \text{T} \; ;$$

$$\frac{\varDelta \, \text{Bstat}}{\varDelta \, \text{Bdyn}} \leqq 1{,}3 \, .$$

In Fig. 2 sind die in der vorgenannten Beziehung enthaltenen Größen im Prinzip dargestellt, der Anschaulichkeit wegen jedoch nicht der Beziehung selbst entsprechend. Mit B ist die magnetische Induktion in der Einheit Tesla in der Formelbeziehung bezeichnet. Die Abstimmung des Resonanzkreises kann in der Weise erfolgen, wie es in DE-C-2 036 497 geschildert ist. Durch die zuvor geschilderte besondere Ausbildung der Magnetkerne kann man auch ohne eine Resonanzabstimmung die Empfindlichkeit gegen Gleichstromkomponenten erhöhen, wenn auch nicht in dem überraschenden Ausmaß, wie es bei der Kombination der geschilderten Maßnahmen der Fall ist. Im Diagramm nach Fig. 2 ist mit 20 die dynamische Hysteresisschleife und mit 21 die statische Hysteresisschleife bezeichnet.

Erfindungsgemäß ist bei einem zur Auslösung führenden Nennfehlerstrom von 300 bzw. 500 mA zusätzlich vorgesehen, daß die Amplitude der magnetischen Feldstärke bei Wechselstrom etwa 0,03 A pro cm beträgt. Die zugeordnete magnetische Induktion liegt danach bei einem Wert größer oder gleich 0,5 Tesla. Es gilt also die Beziehung:

daß etwa $\hat{H} \sim \; = 0{,}03 \, \text{A/cm}$ und daß

$$\hat{B} \geqq 0{,}5 \, \text{T}$$

ist.

Für einen zur Auslösung führenden Nennfehlerstrom kleiner oder gleich 10 mA erzielt man besonders gutes Auslöseverhalten, z. B. bei Halbwellenstrom als Fehlerstrom und gleichzeitig überlagertem glattem Gleichfehlerstrom von 6 mA, wenn das Verhältnis der statischen Differenzinduktion mit Gleichstromüberlagerung zur statischen Differenzstrominduktion ohne Gleichstromüberlagerung einen Wert von 0,85 nicht unterschreitet. Es gilt also die Beziehung

$$\frac{\varDelta \, \text{Bstatmitgleich}}{\varDelta \, \text{Bstatohnegleich}} \geqq 0{,}85 \, .$$

Die erfindungsgemäße Lehre ermöglicht es, aus den handelsüblichen Kernmaterialien günstige auszuwählen.

## Patentanspruch

1. Fehlerstromschutzschalter, der auf Fehlerströme mit Gleichstromkomponenten anspricht,

— dessen Magnetkern (13) des Summenstromwandlers (2) einen Induktionshub hat, der für einen in seiner Primärwicklung (3) fließenden pulsierenden Gleichstromfehlerstrom ausreichend groß ist, um in der Sekundärwicklung (4) eine zum Betätigen des Auslösemagneten (6) mittels seiner Auslösewicklung (5) erforderliche Spannung zu induzieren,

— der zwischen Sekundärwicklung (4) und Auslösewicklung (5) einen Kondensator (9) eingeschaltet hat,

— wobei der dadurch gebildete Schwingkreis auf die Frequenz der Spannung abgestimmt ist, die in der Sekundärwicklung (4) von einem in der Primärwicklung (3) des Summenstromwandlers (2) fließenden pulsierenden Gleichstromfehlerstrom induziert wird,

— und wobei der Magnetkern (13) eine dynamische Differenzinduktion, $\varDelta$ Bdyn, zwischen der maximalen Induktion, Bmax, und der dynamischen Remanenzinduktion, Brdyn, von

$$\varDelta \, \text{Bdyn} \geqq 0{,}1 \, \text{T}$$

aufweist und daß

— das Verhältnis der statischen Differenzinduktion $\varDelta$ Bstat, zwischen der maximalen Induktion, Bmax, und der statischen Remanenzinduktion, Brstat, zur dynamischen Differenzinduktion, $\varDelta$ Bdyn, der Beziehung genügt:

$$\frac{\varDelta \, \text{Bstat}}{\varDelta \, \text{Bdyn}} \leqq 1{,}3 \, ,$$

dadurch gekennzeichnet, daß bei einem Fehlerstromschutzschalter

— für einen zur Auslösung führenden Nennfehlerstrom von 300 bzw. 500 mA weiter die Amplitude der magnetischen Feldstärke bei Wechselstrom etwa $\hat{H} \sim \; = 0{,}03 \, \text{A/cm}$ beträgt und die zugeordnete magnetische Induktion etwa bei $\hat{B} \geqq 0{,}5 \, \text{T}$ liegt, und daß

— für einen zur Auslösung führenden Nennfehlerstrom kleiner oder gleich 10 mA das Verhältnis der statischen Differenzinduktion mit Gleichstromüberlagerung, $\varDelta$ Bstatmitgleich, zur statischen Differenzinduktion ohne Gleichstromüberlagerung, $\varDelta$ Bstatohnegleich, einen Wert von 0,85 nicht unterschreitet, gemäß der Beziehung

$$\frac{\varDelta \, \text{Bstatmitgleich}}{\varDelta \, \text{Bstatohnegleich}} \geqq 0{,}85 \, .$$

## Claim

1. An earth leakage circuit breaker which responds to fault currents with direct current components,

— whose magnetic core (13) of the summation current transformer (2) has an induction stroke which is sufficiently great for a pulsing d. c. fault current flowing in its primary winding (3) to induce in the secondary winding (4) a voltage necessary for actuating the magnetic release device (6) by means of its release winding (5),

— which has a capacitor (9) connected between the secondary winding (4) and the release winding (5),

— wherein the oscillation circuit thus formed can be set to the frequency of the voltage which is induced in the secondary winding (4) by a pulsing d. c. fault current flowing in the primary winding (3) of the summation current transformer (2),

— and wherein the magnetic core (13) has a dynamic differential induction, $\varDelta$ Bdyn, between the maximum induction, Bmax, and the dynamic residual induction, Brdyn, of

$$\varDelta \text{Bdyn} \geqq 0.1 \text{ T}$$

and in that

— the ratio of the static differential induction, $\varDelta$ Bstat, between the maximum induciton Bmax, and the static residual induction, Brstat, to the dynamic differential induction, $\varDelta$ Bdyn, satisfies the equation:

$$\frac{\varDelta \text{Bstat}}{\varDelta \text{Bdyn}} \leqq 1.3 \; ;$$

characterised in that in an earth leakage circuit breaker

— for a nominal fault current of 300 or 500 mA leading to release, the amplitude of the magnetic field strength with alternating current is approximately $\hat{H}\sim \; = 0.03$ A/cm and the associated magnetic induction lies approximately at $\hat{B} \geqq 0.5$ T, and that

— for a nominal fault current leading to release that is smaller than or equal to 10 mA, the ratio of the static differential induction with direct current superimposition, $\varDelta$ Bstat-with-direct, to the static differential induction without direct current superimposition, $\varDelta$ Bstat-without-direct, does not fall below a value of 0.85 according to the equation

$$\frac{\varDelta \text{Bstat-with-direct}}{\varDelta \text{Bstat-without-direct}} \geqq 0.85 \; .$$

**Revendication**

1. Disjoncteur de courant de fuite, qui répond à des courants de fuite possédant des composantes de courant continu,

— dans lequel le noyau magnétique (13) du transformateur d'intensité somme (2) possède une induction dont l'excursion est suffisamment importante pour un courant de fuite continu pulsatoire, circulant dans l'enroulement secondaire (3) du transformateur, pour induire dans l'enroulement secondaire (4) une tension nécessaire pour l'actionnement de l'aimant de déclenchement (6) au moyen du bobinage de déclenchement (5) de ce dernier,

— dans lequel un condensateur (9) est branché entre l'enroulement secondaire (4) et le bobinage de déclenchement (5),

— dans lequel le circuit oscillant ainsi formé est accordé sur la fréquence de la tension qui est induite dans l'enroulement secondaire (4) par un courant de fuite continu pulsatoire circulant dans l'enroulement primaire (3) du transformateur d'intensité somme (2),

— et dans lequel le noyau magnétique (13) possède une induction différentielle $\varDelta$ Bdyn située entre l'induction maximale Bmax et l'induction rémanente dynamique Brdyn et telle que

$$\varDelta \text{Bdyn} \geqq 0{,}1 \text{ T} \; .$$

— et dans lequel le rapport de l'induction différentielle statique, $\varDelta$ Bstat, qui existe entre l'induction maximum Bmax et l'induction rémanente statique Brstat, à l'induction différentielle dynamique $\varDelta$ Bdyn, satisfait à la relation

$$\frac{\varDelta \text{Bstat}}{\varDelta \text{Bdyn}} \leqq 1{,}3 \; .$$

caractérisé par le fait que dans le cas d'un disjoncteur de courant de fuite

—pour un courant nominal de fuite de 300 ou de 500 mA conduisant au déclenchement, l'amplitude de l'intensité de champ magnétique est en outre égale à environ $\hat{H}\sim \; = 0{,}03$ A/cm dans le cas d'un courant alternatif et l'induction magnétique associée est égale à environ $\hat{B} \geqq 0{,}5$ T, et que

— pour un courant nominal de fuite inférieur ou égal à 10 mA et conduisant au déclenchement, le rapport de l'induction différentielle statique avec superposition d'un courant continu, $\varDelta$ Bstat avec superposition, à l'induction différentielle statique sans superposition d'un courant continu, $\varDelta$ Bstat sans superposition, ne tombe pas au-dessous d'une valeur égale à 0,85, conformément à la relation

$$\frac{\varDelta \text{Bstat avec superposition}}{\varDelta \text{Bstat sans superposition}} \geqq 0{,}85 \; .$$

FIG 1

FIG 2